# EUROPEAN PATENT APPLICATION

(11) **EP 1 437 694 A1**
(43) Date of publication of application: **14.07.2004**
(21) Application number: 03075133.3
(22) Date of filing: 13.01.2003
(51) Int. Cl.: G07F 7/06, B65F 3/00

(54) **Method and apparatus for handling returnable drink containers**

(71) Applicant: Damotek design ApS, 3400 Hillerod (DK)
(72) Inventor: Olsen, Bent Hjort, 3400 Hillerod (DK)
(74) Representative: Elmeros, Claus

(57) **Abstract**

The present invention concerns a method and an apparatus for returnable packaging, such as cans and bottles for disposal in reverse vending machines. In such a machine, one or more returnable bottles or cans are received from a customer and in return for the drink containers, refund money is given to the customer corresponding to the returned drink containers based on an identification and a count performed by the reverse vending machine. Reverse vending machines are typically installed in supermarkets where customers return their empty bottles and/or cans and dispose them in the reverse vending machine before doing the shopping.

By the present invention, a new type of reverse vending machine is provided, where the reverse vending machine is installed on a mobile platform, which may be moved to between collection sites for domestic collection of returnable drink containers. This means that the customers no longer must store and transport the empty packaging back to the store in order to receive the refund. Instead, a recycling scheme may be provided, in particular in urban habitats, which is circulated in housing estates or the like for collecting the packaging in the domestic areas where the drink containers are typically consumed.

## Description

The present invention relates to a method and an apparatus for returnable packaging, such as cans and bottles for disposal in reverse vending machines.

Such reverse vending machines and methods for receiving recyclable drink containers are known in the art. In such a machine, one or more returnable bottles or cans are received from a customer and in return for the drink containers, refund money is given to the customer corresponding to the returned drink containers based on an identification and a count performed by the reverse vending machine. Some machines are also provided with means for receiving bottle crates in a separate inlet opening. Reverse vending machines are typically installed in supermarkets where customers return their empty bottles and/or cans and dispose them in the reverse vending machine before doing the shopping.

By the present invention, a new type of reverse vending machine is provided, where the reverse vending machine is installed on a mobile platform, which may be moved to between collection sites for domestic collection of returnable drink containers. The invention also relates to a method for mobility collecting returnable drink containers. This means that the customers no longer must store and transport the empty packaging back to the store in order to receive the refund. Instead, a recycling scheme may be provided, in particular in urban habitats, which is circulated in housing estates or the like for collecting the packaging in the domestic areas where the drink containers are typically consumed. In relation to the collection of returnable cans, the invention is particularly advantageous since the weight and size of the cans is significantly less that it is the case in relation to glass bottles. With respect to the weight issue, the invention may also advantageously be used for plastic bottles. According to the invention, the customers no longer need to transport the returnable cans back to the store, which is particularly advantageous with respect to cans. Cans which are buckled or otherwise deformed, may no longer be refundable in the reverse vending machines, so with a method according to the invention the risk of deforming and thereby loosing the refund value of the cans is reduced. Moreover, the method offers environmental advantages, since the consumers no longer has to transport the packaging materials around in relative small quantities.

The collecting sites may be arranged in a predetermined route and the unit being driven through said route on a regular basis and/or upon a specific user request. The collection sites of said predetermined route might then be announced to relevant habitants in the neighbourhood of said sites, so that the consumers can easily dispose of their empty drink containers and receive the corresponding refund outside their own home.

The reverse vending machine could be mounted on a self-propelled vehicle or mounted on a trailer attachable to a vehicle, such as a van or a truck. A storage space may be provided adjacent to the reverse vending machine on said movable platform and crushing means may preferably be provided for reducing the size of the returned drink containers before storage. This is particularly advantageous for the collection of returnable cans as the storage space required thereby can be considerably reduced.

A product outlet may advantageously be arranged on the mobile platform for selling for instance ice creams, candy, fast food products, etc. in the domestic areas. It is known to circulate product sales vehicles in living areas selling or delivering e.g. ice-creams, dairy products, or food products directly at the doorstep of the consumers. It is realised that the invention could be combined with such vehicles whereby a better service to the consumers may be provided.

The invention is described in the following with reference to the accompanying drawings, in which:
- fig. 1: is a schematic diagram of the reverse vending machine for receiving and handling returnable drink containers, and
- fig. 2: is a schematic illustration of an apparatus according to a preferred embodiment of the invention.

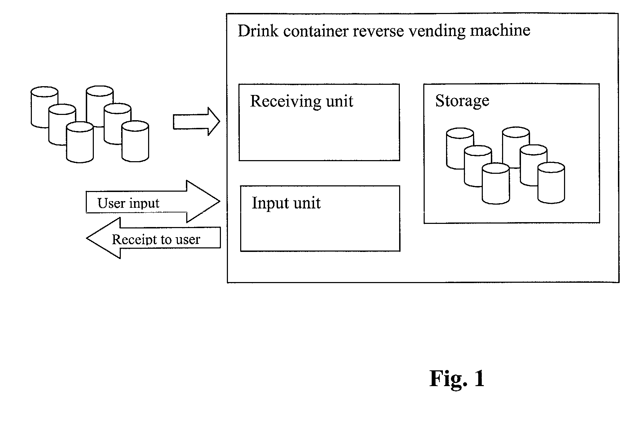

As shown in schematic form in fig. 1, the vending operation for returnable drink containers involves that the user inserts the cans into a receiving unit of a reverse vending machine, which calculates a corresponding money refund, which is then returned to the user.

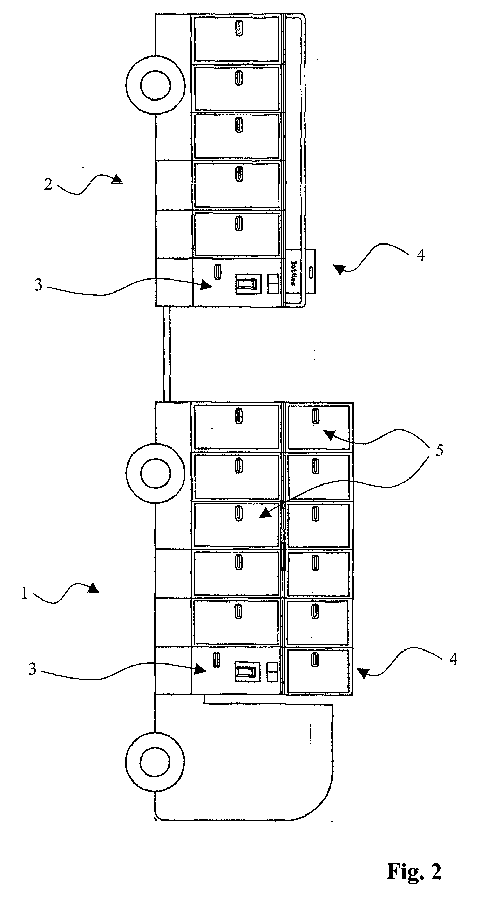

In fig. 2, a service vehicle 1, e.g. a van, which is equipped with a reverse vending machine 3 for receiving and handling cans and bottles, is shown. In the embodiment shown, a trailer 2 is also provided, which is also with a reverse vending machine 3. A storage 4 is provided adjacent the reverse vending machine 3. This storage could involve a storage area on the roof of the trailer or the van, for storing bottles and bottle crates. The storage 4 may also include a space behind the reverse vending machine 3 in which the returned cans are to be stored. These cans may preferably be reduced in size by crushing means (not shown). Hereby, an effective use of the storage space is achieved as a large amount of returned cans for recycling thereby can be accommodated in the vehicle and trailer. The returned bottles may be pre-sorted according to material, including glass colour, plastic bottles, types, etc. Hereby, a later handling is made easier, e.g. when the collected bottles are returned to a recycling collecting point.

Beside the reverse vending machines, a number of product storage compartments 5 are arranged on both the van itself and the trailer. These product storage compartments may be refrigerated in order to accommodate chilled or frozen products, such as fresh drinks, ice cream products, fast food, meet, fish or dairy products. The reverse vending machine is thus an integral part of the vehicle design. When the van and the trailer is emptied for cans and bottles at the site where the vehicle is reloaded with new products. The vehicle is driven around a domestic area in a predetermined route so that the habitants are able to prepare their return of recyclable bottles and cans for being collected at a specific time e.g. once a week or once a month.

A money refund is calculated when the user/customer has returned his batch of returnable cans and bottles. Some of the bottles (or even all of them) may be without a refund value, but with these bottles and cans could also be collected and sorted to a separate storage compartment (not shown). This would offer an extra environmental advantage, since returned bottles without any refund value could also be collected for recycling.

Although the method and apparatus is primarily for use in connection with domestic trading services, it is realised that the apparatus may also be used in rural areas, e.g. as a service to elderly or disabled persons who are restricted in their movement and cannot carry returnable drink containers with them to a shop.

## Claims

1. A method of receiving and handling returnable packaging, such as drink containers, in particular bottles or cans, whereby drink containers are returned to a reverse vending machine for being collected for recycling purposes, and whereby the returned drink containers are individually fed into the machine and identified therein and the amount of drink containers fed into the machine is calculated upon user demand,
**characterised in that**
said reverse vending machine is moved to between collection sites for domestic collection of returnable drink containers.

2. A method according to claim 1, whereby the user operates a user input means inputs data, allowing the user to input the user demand that a particular vending operation is finished after having fed the machine with a batch of disposable drink containers.

3. A method according to claim 2, whereby the amount and types of drink containers are determined upon the input from the user and a refund fee is calculated thereupon.

4. A method according to claim 3, whereby a receipt or other monetary means are returned to the user once the refund fee is calculated.

5. A method according to any of the claims 1 to 4, whereby said drink containers being cans or bottles for beverage drinks.

6. A method according to claim 1, whereby said collecting sites being arranged in a predetermined route and the unit being driven through said route on a regular basis and/or upon a specific user request.

7. A method according to claim 6, whereby the collection sites of said predetermined route is announced to relevant habitants in the neighbourhood of said sites.

8. An apparatus for receiving and handling returnable packaging, such as drink containers, in particular bottles or cans, wherein one or more drink containers are returned to the apparatus, said apparatus comprising a reverse vending machine for collecting drink containers for recycling purposes, and wherein the returned drink containers are individually fed into the machine and identified therein by identifying means and the amount of drink containers fed into the machine is calculated upon user demand,
**characterised in that**
said reverse vending machine is installed on a mobile platform, which may be moved to between collection sites for domestic collection of returnable drink containers.

9. An apparatus according to claim 8, wherein the reverse vending machine is mounted on a self-propelled vehicle.

10. An apparatus according to any of the claims 8 or 9, wherein the reverse vending machine is mounted on a trailer attachable to a vehicle.

11. An apparatus according to any of the claims 8 to 10, wherein storage space is provided adjacent to the reverse vending machine on said movable platform.

12. An apparatus according to claim 11, wherein crushing means are provided for reducing the size of the returned drink containers before storage.

13. An apparatus according to claim 8, wherein a product outlet is arranged on the mobile platform.

14. An apparatus according to claim 13, wherein said products for being sold from the product outlet being fresh drinks, ice cream products, fast food, meet, fish or dairy products.
